# EUROPEAN PATENT SPECIFICATION

(11) **EP 2 908 228 B1**
(45) Date of publication and mention of the grant of the patent: **20.09.2017**
(21) Application number: 15153482.3
(22) Date of filing: 02.02.2015
(51) Int. Cl.: G06F 3/041, G06F 3/044

(54) **Touch window**
Berührungsempfindliches Fenster
Fenêtre tactile

(30) Priority: 13.02.2014 KR 20140016645
(43) Date of publication of application: 19.08.2015
(73) Proprietor: LG Innotek Co., Ltd., Seoul, 04637 (KR)
(72) Inventor: Kim, Hyun Jung, Seoul 100-714 (KR)
(74) Representative: Novagraaf Technologies

(56) References cited:
- JP-A- 2013 152 599
- TW-A- 201 327 316
- US-A1- 2012 247 938

## Description

### BACKGROUND

The invention relates to a touch window.

Recently, a window, which performs an input function through the touch of an image displayed on a display device by an input device such as a stylus pen or a finger, has been applied to various electronic appliances.

Such a window may be typically classified into a resistive touch window and a capacitive touch window. In the resistive touch window, glass is shorted with an electrode due to the pressure of the input device so that a touch point is detected. In the capacitive touch window, the position of the touch point is detected by detecting the variation in capacitance between electrodes when a finger of the user is touched on the capacitive touch window.

In the resistive type touch window, the repeated use may degrade the performance thereof, and cause scratches. Accordingly, the interest on the capacitive type touch window representing superior durability and having a long lifespan is increased.

Meanwhile, although indium tin oxide (ITO) has been most extensively used for an electrode of a touch window, ITO has a limitation in the realization of low-resistance required for a large-area touch window. Therefore, recently, a transparent electrode based on a mesh-shape metal thin film has been spotlighted.

The touch window may include a sensing electrode formed on a substrate, and a wire electrode formed on an edge of the substrate and connected with the sensing electrode. In this case, as left and right Bezel regions having wire electrodes are widened, a smaller touch panel may not be realized.

Accordingly, a single routing scheme in which a wire electrode is formed only on one of both ends of the sensing electrode is disclosed. However, in this case, since the wire electrode is connected with only one of both ends of the sensing electrode, the electrical characteristic, such as the resistance, at both ends of the sensing electrode may not be measured, so that the measurement of the efficiency and the failure of the sensing electrode may be difficult. Therefore, the reliability may be degraded.

Therefore, there is required a touch window having a novel structure capable of reducing a Bezel region while solving the above problem.
JP 2013 152599 A1 discloses an electroconductive sheet which has a conductive pattern arranged parallelly by a metal fine wire, where a pair of electrode terminal is electrically connected with an edge unit of the conductive pattern. The pair of electrode terminal of two conductive patterns is located in an outermost unit in the electrode terminals. A shape and an optical characteristic of the pair of electrode terminal are different. An area of the electrode terminal is different when the shapes are different. A transmittance of the electrode terminal is zero percent. TW 201 327 316 A discloses a conductive sheet which includes a substrate having a first main surface and a second main surface; and a first electrode pattern placed on the first main surface of the substrate. The first electrode pattern is made of metal thin wires, and includes a plurality of first conductive patterns that extend in a first direction. Each first conductive pattern includes, at least, inside thereof, a sub-nonconduction pattern that is electrically separated from the first conductive pattern. US 2012/247938 A1 discloses a device which has transparent electrode layers formed in input region of the substrates. The transparent electrode layers are configured to detect a change of a capacitance value. The wiring layers are formed on a non-input region of a substrate. The pad portions are electrically connected to the two ends of the transparent electrode layer, respectively. The wiring layers are electrically connected to the transparent electrode layers through a pad portion.

### SUMMARY

The embodiment provides a touch window capable of improving reliability and reducing a Bezel region. Accordingly, the present invention provides a touch window as defined in the appended independent claim 1. Further embodiments are are defined in the appended dependent claims.

### BRIEF DESCRIPTION OF THE DRAWINGS

FIG. 1 is a plan view showing a touch window according to an aspect of the disclosure.
FIG. 2 is another plan view showing the touch window according to an aspect of the disclosure.
FIGS. 3 to 5 are sectional views to explain processes of forming a sensing electrode according to the embodiment.
FIG. 6 is a sectional view taken along line A-A' of FIG. 2.
FIG. 7 is a plan view showing a touch window according to the first embodiment.
FIG. 8 is a sectional view taken along line B-B' of FIG. 7.
FIG. 9 is a plan view showing a touch window according to the second embodiment.
FIG. 10 is a sectional view taken along C-C' of FIG. 9.
FIGS. 11 to 16 are views showing various types of touch windows.
FIGS. 17 to 22 are sectional views showing various types of touch devices in which the touch window according to the embodiment is assembled with a display panel.
FIGS. 23 to 26 are views showing a touch device employing a touch window according to the embodiment.

### DETAILED DESCRIPTION OF THE EMBODIMENTS

In the following description of the embodiments, it will be understood that, when a layer (film), a region, a pattern or a structure is referred to as being "on" or "under" a substrate, another layer (film), another region, another pad or another patterns, it can be "directly" or "indirectly" on the other layer (film), the other region, the other pattern or the other structure, or one or more intervening layers may also be present. Such a position of each layer described with reference to the drawings.

In the following description, when a part is connected to the other part, the parts are not only directly connected to each other, but also electrically connected to each other while interposing another part therebetween. In the following description, when a predetermined part "includes" a predetermined component, the predetermined part does not exclude other components, but may further include other components unless the context clearly indicates otherwise.

The thickness and size of each layer (film), region, pattern, or structures shown in the drawings may be modified for the purpose of convenience or clarity of explanation. In addition, the size thereof does not utterly reflect an actual size.

Hereinafter, the embodiment will be described in detail with reference to accompanying drawings.

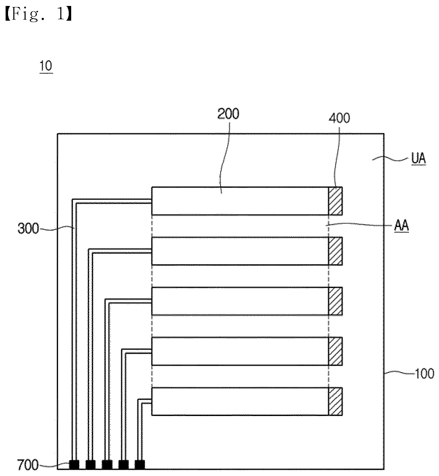

Hereinafter, a touch window 10 according to an aspect of the disclosure will be described with reference to FIGS. 1 to 3.

Referring to FIGS. 1 to 3, the touch window 10 according to an aspect of the disclosure may include a substrate 100, a sensing electrode 200, a wire electrode 300, and a dummy electrode 400.

The substrate 100 may be rigid or flexible. For example, the substrate 100 may include glass or plastic. In detail, the substrate 100 may include chemically tempered glass, such as soda lime glass or aluminosilicate glass, plastic such as polyimide (PI) or polyethylene terephthalate (PET), or sapphire.

The sapphire has superior electric characteristics, such as permittivity, so that a touch response speed may be significantly increased and a space touch such as hovering may be easily realized. In addition, since the sapphire has high surface strength, the sapphire is applicable to a cover substrate. The hovering refers to a technique of recognizing coordinates even in a position spaced apart from a display by a short distance.

In addition, the substrate 100 is bendable with a partially curved surface. In other words, the substrate 100 is bendable while a portion of the substrate 100 has a flat surface and another portion of the substrate 100 has a curved surface. In detail, an end portion of the substrate 100 may be bent with a curved surface or may be curved or bent with a surface having a random curvature.

The substrate 100 may have an active area AA and an unactive area UA defined therein.

An image may be displayed in the active area AA. The image is not displayed in the unactive area UA provided at a peripheral portion of the active area AA.

In addition, the position of an input device (e.g., finger) may be sensed in at least one of the active area AA and the unactive area UA. If the input device, such as a finger, touches the touch window, the variation of capacitance occurs in the touched part by the input device, and the touched part subject to the variation of the capacitance may be detected as a touch point.

The sensing electrode 200 may be provided on the substrate 100. In detail, the sensing electrode 200 may be provided on at least one of the active region AA and an unactive region UA.

The sensing electrode 200 may be provided in the mesh shape.

The sensing electrode may include a transparent conductive material allowing electricity to flow without the interruption of light transmission. For example, the sensing electrode 200 may include a metallic oxide, such as indium tin oxide, indium zinc oxide, copper oxide, tin oxide, zinc oxide, or titanium oxide.

In addition, the sensing electrode 200 may include nanowire, a photosensitive nanowire film, a carbon nanotube (CNT), graphene, conductive polymer, or the mixture thereof.

In addition, the sensing electrode 200 may include various metallic materials. For example, the sensing electrode 200 may include at least one of chromium (Cr), nickel (Ni), copper (Cu), aluminum (Al), silver (Ag), molybdenum (Mo), gold (Au), titanium (Ti) and the alloy thereof.

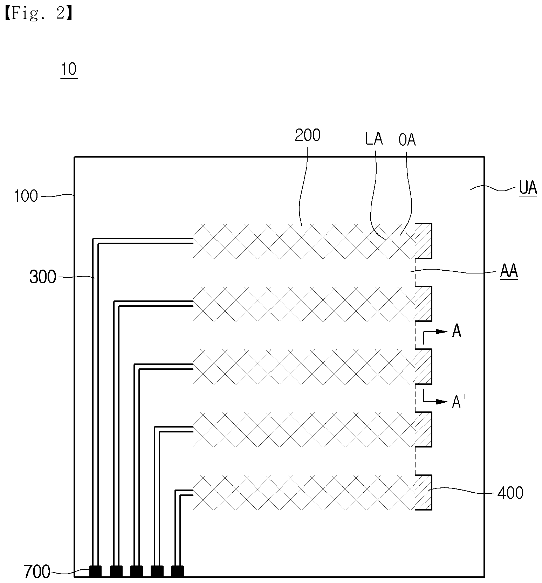

Referring to FIG. 2, the sensing electrode 200 may be provided in the mesh shape. In detail, the sensing electrode 200 may include a plurality of sub-electrodes, and the sub-electrodes may be provided while crossing each other in the form of the mesh.

In detail, the sensing electrode 200 may include a mesh line LA formed by a plurality of sub-electrodes crossing each other in a mesh shape and a mesh opening OA between mesh lines LA. In this case, a line width of the mesh line LA may be in the range of 0.1 *µ*m to 10 *µ*m. A mesh line LA of less than about 0.1 *µ*m may not be formed due to the characteristics of the manufacturing process. In the case of the line width exceeding about 10 *µ*m, the pattern of the sensing electrode 200 may be recognized to the outside, so that the visibility may be degraded. Preferably, the line width of the mesh line LA may be in the range of 0.5 *µ*m to 7 *µ*m. More preferably, the line width of the mesh line LA may be in the range of 1 *µ*m to 3.5 *µ*m.

In addition, the mesh opening part OA may have various shapes. For example, the mesh opening part OA may have a polygonal shape, such as a square shape, a diamond shape, a pentagon shape, or a hexagonal shape, or a circular shape. In addition, the mesh opening part OA may have a regular shape or a random shape.

As the sensing electrode 200 has the mesh shape, the pattern of the sensing electrode may not be viewed on the active region AA. In other words, even if the sensing electrode 200 is formed of metal, the pattern may be not viewed. In addition, even if the sensing electrode is applied to a large-size touch window, the resistance of the touch window may be lowered.

The sensing electrode 200 may be formed in the mesh shape through various schemes.

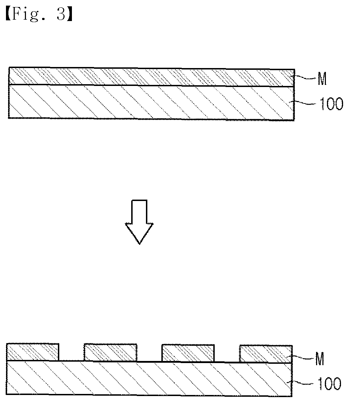

FIGS. 3 to 5 are sectional views to explain a process of forming the sensing electrode according to the embodiment.

Referring to FIG. 3, the sensing electrode according to the embodiment may include a mesh-shaped electrode formed by providing a metallic layer M on an entire surface of the substrate 100 and etching the metallic layer M in the mesh shape. For example, after depositing the metallic layer M including copper (Cu) on the entire surface of the substrate 100 including polyether terephthalate, the cooper (Cu) layer is etched to form a copper metal mesh electrode having an embossed mesh shape.

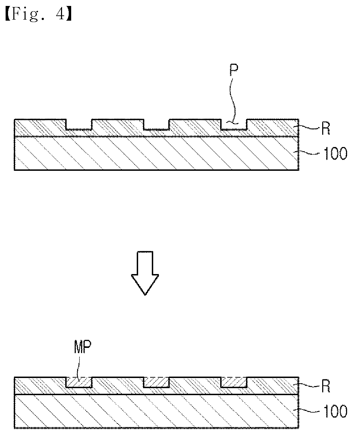

In addition, referring to FIG. 4, in order to form the sensing electrode 200 according to the embodiment, after forming a resin layer (R) including a photocurable resin or thermosetting resin layer on the substrate 100, an intaglio pattern P is formed in the mesh shape on the resin layer R, and a metallic paste MP may be filled in the intaglio pattern P. In this case, the intaglio pattern of the resin layer may be formed by imprinting a mold having an emboss pattern.

The metallic paste MP may include at least one of chrome (Cr), nickel (Ni), copper (Cu), aluminum (Al), gold (Ag), molybdenum (Mo), and the alloy thereof. Accordingly, after filling the metallic paste MP in the intaglio pattern P having the mesh shape, the resultant structure is cured to form the metallic mesh electrode having the shape of the intaglio mesh.

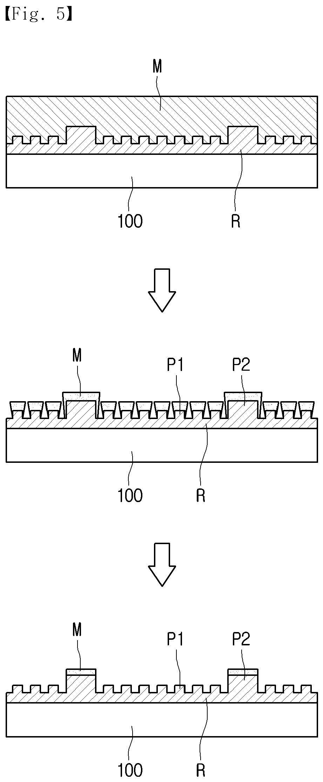

In addition, referring to FIG. 5, in order to form the sensing electrode 200, after forming the resin layer (R) including a photocurable resin or thermosetting resin layer on the substrate 100, an emboss nano-pattern and a micro-pattern having the mesh shape are formed on the resin layer R. Then, the metallic layer M including at least one of Cr, Ni, Cu, Al, Ag, Mo, and the alloy thereof may be formed on the resin layer through a sputtering process.

In this case, the emboss pattern of the nano-pattern and the micro-pattern may be formed by imprinting a mold having an intaglio pattern.

Thereafter, only the metallic layer formed on the nano-pattern is removed and only the metallic layer formed on the micro-pattern remains by etching the metallic layers formed on the nano-pattern and the micro-pattern, so that the metallic electrode having the mesh shape may be formed.

In this case, when the metallic layers are etched, the difference in the etching rate between the metallic layers may be made due to the difference between a contact area of the nano-pattern P1 and the metallic layer and a contact area of the micro-pattern P2 and the metallic layer. In other words, since the contact area of the micro-pattern and the metallic layer is wider than the contact area of the nano-pattern and the metallic layer, the electrode material layer formed on the micro-pattern is less etched. As the etching process is performed at the same etching rate, the metallic layer formed on the micro-pattern remains, and the metallic layer formed on the nano-pattern P1 is completely etched and removed. Accordingly, the metallic electrode having the shape of an emboss mesh having a micro-pattern may be formed on the substrate 100.

The wire electrode 300 may be provided on the substrate 100. The wire electrode 300 may include the same material as that of the sensing electrode 200. In addition, the wire electrode 300 may be formed in a bulk shape or a mesh shape. The wire electrode 300 is connected with one of both ends of the sensing electrode 200 and may be provided on the substrate 100. In other words, the wire electrode 300 may be connected with one of one end and an opposite end of the sensing electrode 200.

The wire electrode 300 may be provided on the substrate 100 so that the wire electrode 300 may be connected with a printed circuit board mounted thereon with a driving chip through a pad part 700. The printed circuit board may include various shapes of printed circuit boards. For example, the printed circuit board may include a flexible circuit board (FPCB).

The dummy electrode 400 may be provided on the substrate 100. In detail, the dummy electrode 400 may be provided on at least one of the active region AA and the unactive region UA of the substrate 100.

The dummy electrode 400 may be connected with the sensing electrode 200. In detail, the dummy electrode 400 may be connected with one of both ends of the sensing electrode 200. In other words, the dummy electrode 400 may be connected with one of an end and an opposite end of the sensing electrode 200. Accordingly, one of both ends of the sensing electrode 200 is connected with the wire electrode 300, and the opposite end of the wire electrode 300 may be connected with the dummy electrode 400. In other words, one end of the sensing electrode 200 may be connected with the wire electrode 300, and the opposite end of the sensing electrode 200 may be connected with the dummy electrode 400.

Although FIGS. 1 and 2 show that the wire electrode is connected with a left end of the sensing electrode, and the dummy electrode is connected with a right end of the sensing electrode, the aspect of the disclosure is not limited thereto. The wire electrode and the dummy electrode may be connected with one of both ends of the sensing electrodes. In other words, one wire electrode may be connected with a left end of the sensing electrode, and another wire electrode may be connected with a right end of the sensing electrode. In addition, one dummy electrode may be connected with a right end of the sensing electrode, and another dummy electrode may be connected with a left end of the sensing electrode.

The dummy electrode 400 may include a connector. In detail, regarding the sensing electrode 200, electrical characteristics may be compared between the end of the sensing electrode 200 connected with the wire electrode 300 and the opposite end of the sensing electrode 200 connected with the dummy electrode 400. In other words, the dummy electrode 400 may serve as a test connector for the comparison between the electrical characteristics at both ends of the sensing electrode 200.

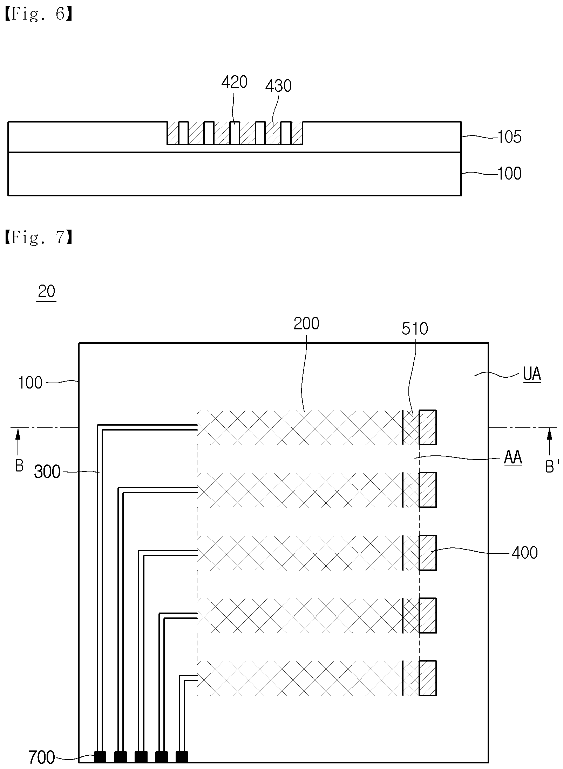

Referring to FIG. 6, the dummy electrode 400 may be formed by filling a conductive material in a pattern after forming the pattern in a resin layer 105 provided on the substrate 100.

For example, an intaglio pattern may be formed in the resin layer 105, and a conductive material, for example metal (that is, metallic paste), is filled in the intaglio pattern, thereby forming the dummy electrode 400.

A protrusion part 420 may be formed in the intaglio pattern. Accordingly, when a conductive material 430 is filled in the intaglio pattern, the conductive material may be overall filled at a uniform thickness in the intaglio region due to the protrusion part 420. Accordingly, an amount of coated metallic paste can be reduced.

In addition, the dummy electrode 400 may be formed with a width of about 0.5 mm to about 3 mm. If the width of the dummy electrode 400 is less than 0.5 mm, the dummy electrode 400 may not be smoothly connected with the sensing electrode. If the width of the dummy electrode 400 exceeds 3.0 mm, a Bezel region may be widened due to the width of the dummy electrode.

The touch window according to an aspect of the disclosure may reduce the width of the Bezel region.

In other words, the touch window according to an aspect of the disclosure may include a dummy electrode connected with one of both ends of the sensing electrode.

The dummy electrode is connected with an end of the sensing electrode to serve as a connector. Accordingly, in the single routing scheme in which a wire electrode is connected with only one of both ends of the sensing electrode, the Bezel region can be more reduced as compared with the case that the wire electrodes are connected with both ends of the sensing electrode. However, since only one of both ends of the sensing electrode is connected with the wire electrode, it is difficult to measure the electrical characteristic at the opposite end of the sensing electrode which is not connected with the wire electrode, so that the failure rate of the sensing electrode may not be checked.

Accordingly, the dummy electrode connected with the end of the sensing electrode to serve as the test connector is provided at the active region, the unactive region, or the boundary region of the substrate, so that one end of the sensing electrode is connected with the dummy electrode serving as the test connector, and the opposite end of the sensing electrode is connected with the wire electrode. Accordingly, the electrical characteristics can be easily measured at both ends of the sensing electrode, so that the reliability can be improved. In addition, since the wire electrode is connected with only one of both ends of the sensing electrode, the Bezel region can be more reduced as compared with the case that the wire electrodes are connected with both ends of the sensing electrode. Accordingly, the Bezel region of the touch window can be reduced.

Therefore, the touch window according to an aspect of the disclosure can improve reliability and realize the narrow Bezel region.

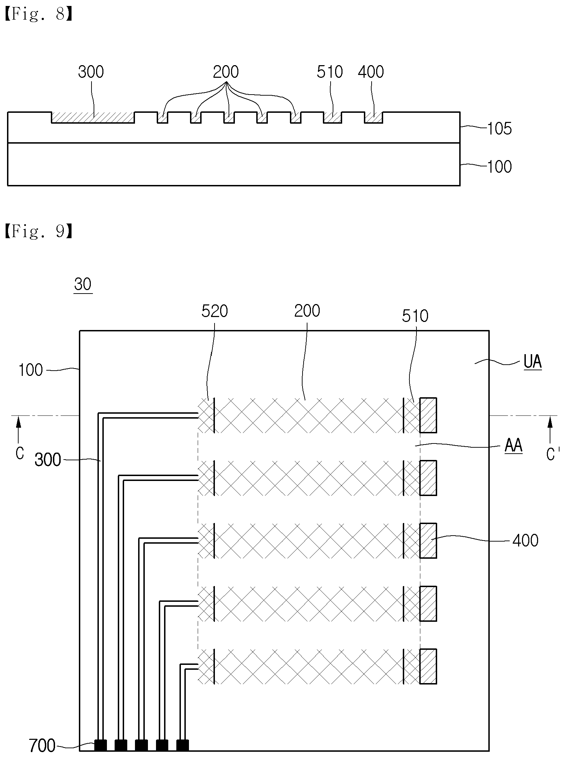

Hereinafter, a touch window according to the first embodiment will be described with reference to FIGS. 7 and 8. In the following description of the touch window according to the first embodiment, the details of structures and components the same as or similar to those of the touch window described according to an aspect of the disclosure will be omitted.

Referring to FIGS. 7 and 8, the touch window 20 according to the first embodiment may further include a first reinforcement electrode 510.

The first reinforcement electrode 510 may be provided between the sensing electrode 200 and the dummy electrode 400. In detail, the first reinforcement electrode 510 may be directly connected with the sensing electrode 200 and the dummy electrode 400.

The first reinforcement electrode 510 may include a material the same as or similar to that of the sensing electrode 200.

The first reinforcement electrode 510 may have a mesh shape. In detail, the first reinforcement electrode may have the mesh shape similar to that of the sensing electrode 200.

For example, the sensing electrode 200 may include a first mesh line, and the first reinforcement electrode 410 may include a second mesh line.

The thickness of the first mesh line may be different from that of the second mesh line. In detail, the thickness of the first mesh line may be less than that of the second mesh line.

In other words, when comparing with the second mesh line adjacent to the unactive region UA, the first mesh line provided on the active region AA is recognized from the outside. Accordingly, the first mesh line is formed with a thickness less than that of the second mesh line, so that the visibility of the touch window can be improved.

In addition, the width of the second mesh line may be different from that of the first reinforcement electrode 510.

The touch window according to the first embodiment may further include the first reinforcement electrode between the second electrode and the dummy electrode. Therefore, as compared with the case that the sensing electrode is directly connected with the dummy electrode, the contact area can be more improved in the case that the sensing electrode is connected with the dummy electrode through the first reinforcement electrode. In other words, the region where the sensing electrode is not connected with the dummy electrode can be reduced due to the first reinforcement electrode.

Therefore, according to the touch window of the first embodiment, since the sensing electrode can be prevented from being disconnected from the dummy electrode due to the first reinforcement electrode, the electrical characteristic can be more exactly measured at both ends of the sensing electrode connected with the wire electrode and the dummy electrode, so that the failure of the sensing electrode can be prevented.

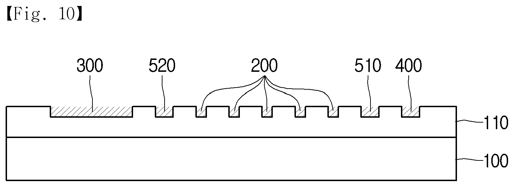

Hereinafter, a touch window according to the second embodiment will be described with reference to FIGS. 9 and 10.

Referring to FIGS. 9 and 10, the touch window according to the second embodiment may include the first reinforcement electrode 510 and a second reinforcement electrode 520.

Identically to the touch window according to the first embodiment, the first reinforcement electrode 510 is interposed between the sensing electrode 200 and the dummy electrode 400, so that the first reinforcement electrode 510 may be connected with the sensing electrode 200 and the dummy electrode 400.

The second reinforcement electrode 520 may be interposed between the sensing electrode 200 and the wire electrode 300. In detail, the second reinforcement electrode 520 may directly make contact with the sensing electrode 200 and the wire electrode 300.

The second reinforcement electrode 520 may include a material identically to or similarly to that of the sensing electrode 200.

The second reinforcement electrode 520 may have the mesh shape. In detail, the second reinforcement electrode 520 may have the mesh shape the same as that of the sensing electrode 200 described above.

For example, the sensing electrode 200 may have the first mesh line, and the second reinforcement electrode 520 may have the third mesh line.

The thickness of the first mesh line may be different from that of the second mesh line. In detail, the thickness of the first mesh line may be less than that of the second mesh line.

The thickness of the first mesh line may be different from that of the third mesh line. In detail, the thickness of the first mesh line may be less than that of the third mesh line. In other words, when comparing with the third mesh line adjacent to the unactive region UA, the first mesh line provided on the active region AA is recognized from the outside. Accordingly, the first mesh line is formed at a thickness less than that of the third mesh line, so that the visibility of the touch window can be improved.

The touch window according to the second embodiment may further include the second reinforcement electrode interposed between the sensing electrode and the wire electrode. Therefore, as compared with the case that the sensing electrode is directly connected with the wire electrode, the contact area can be more improved in the case that the sensing electrode is connected with the wire electrode through the second reinforcement electrode. In other words, the region where the sensing electrode is not connected with the wire electrode can be reduced due to the second reinforcement electrode.

Therefore, according to the touch window of the second embodiment, since the sensing electrode can be prevented from being disconnected from the wire electrode due to the second reinforcement electrode, the electrical characteristic can be more exactly measured at both ends of the sensing electrode connected with the wire electrode and the dummy electrode, so that the failure of the sensing electrode can be prevented.

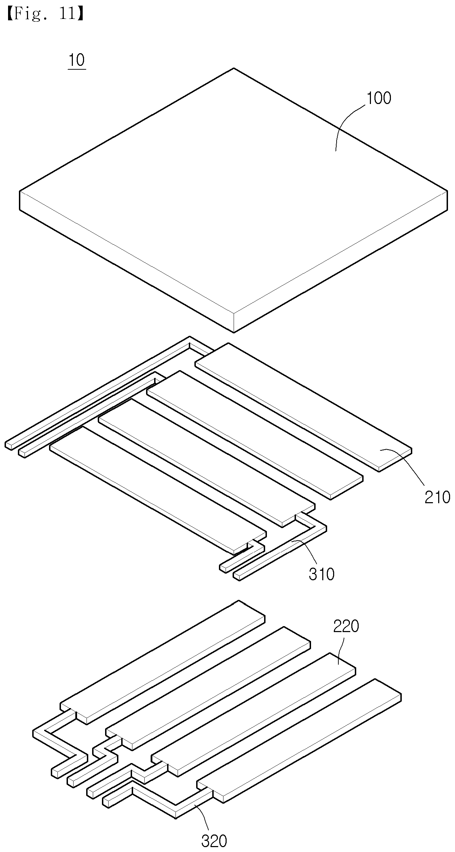

FIGS. 11 to 16 are views showing various types of touch windows according to the arrangement positions of the sensing electrode.

Referring to FIG. 11, the touch window 10 according to the embodiment may include the substrate 100, and first and second sensing electrodes 210 and 220 on the substrate 100.

The substrate 100 may include a cover substrate.

In detail, the substrate 100 is provided on one surface thereof with the first and second sensing electrodes 210 and 220 extending in mutually different directions, and first and second wire electrodes 310 and 320 connected with the first and second sensing electrodes 210 and 220, respectively. The first and second sensing electrodes may be provided on the same surface of the substrate 100 while being insulating from each other.

In other words, the first sensing electrode 210 may extend in one direction, and the second sensing electrode 220 may extend in a direction different from the one direction.

Further, at least one of the first and second sensing electrodes 210 and 220 may have a mesh shape, and may include the dummy electrode and/or the reinforcement electrodes described above.

Since the dummy electrode and the reinforcement electrodes are the same as those described according to previous embodiments, the details thereof will be omitted below.

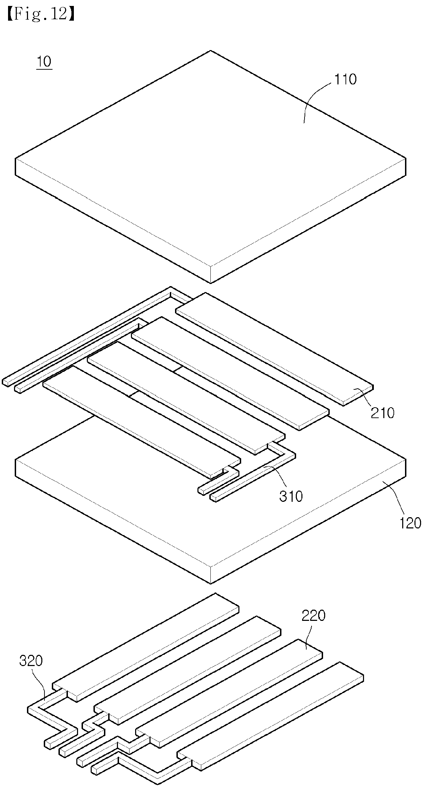

Referring to FIG. 12, the touch window 10 according to the embodiment may include the first and second substrates 110 and 120, and may include the first sensing electrode on the first substrate 110 and the second sensing electrode on the substrate 120.

In detail, the first substrate 110 is provided on one surface thereof with the first sensing electrode 210 extending in one direction and the first wire electrode 310 connected with the first sensing electrode 210, and the second substrate 120 is provided on one surface thereof with the second sensing electrode 220 extending in a direction different from the one direction and the second wire electrode 320 connected with the second sensing electrode 220.

The first substrate 110 may include a cover substrate. In addition, the first and second substrates 110 and 120 may be bonded to each other through an optical clear adhesive (OCA).

Further, at least one of the first and second sensing electrodes 210 and 220 may have a mesh shape, and may include the dummy electrode and/or the reinforcement electrodes described above.

Since the dummy electrode and the reinforcement electrodes are the same as those described according to previous embodiments, the details thereof will be omitted below.

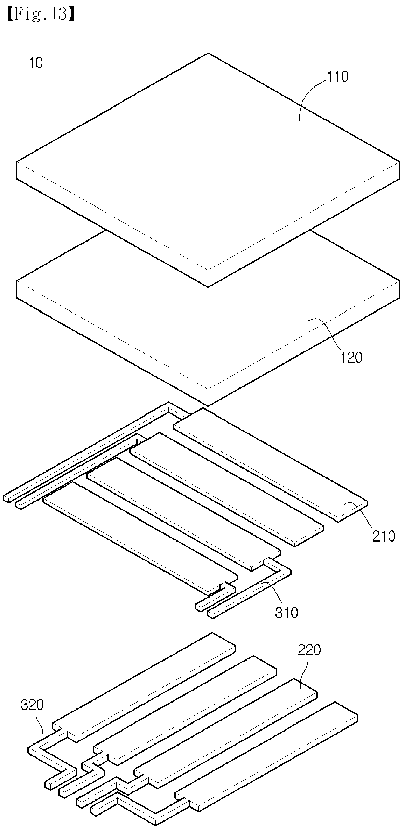

Referring to FIG. 13, the touch window 10 according to the embodiment may include the first and second substrates 110 and 120, and may include the first and second sensing electrodes 220 on the second substrate 120.

In detail, the second substrate 120 is provided on one surface thereof with the first and second sensing electrodes 210 and 220 extending in mutually different directions, and the first and second sensing electrodes 210 and 220 may be provided on the same surface of the second substrate 120 while being insulated from each other.

The first substrate 110 may include a cover substrate. In addition, the first and second substrates 110 and 120 may be bonded to each other through an optical clear adhesive (OCA).

Further, at least one of the first and second sensing electrodes 210 and 220 may have a mesh shape, and may include the dummy electrode and/or the reinforcement electrodes described above.

Since the dummy electrode and the reinforcement electrodes are the same as those described according to previous embodiments, the details thereof will be omitted below.

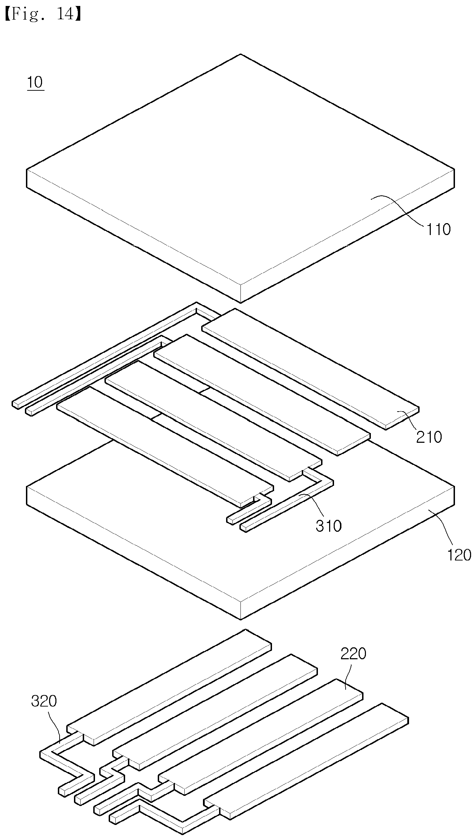

Referring to FIG. 14, the touch window 10 according to the embodiment may include the first and second substrates 110 and 120, and may include the first and second sensing electrodes on the second substrate 120.

In detail, the second substrate 120 may be provided on one surface thereof with the first sensing electrode 210 extending in one direction and the first wire electrode 310 connected with the first sensing electrode 210. The second substrate 120 may be provided on another surface (that is, a surface opposite to the one surface) thereof with the second sensing electrode 220 extending in a direction different from the one direction and the second wire electrode 320 connected with the second sensing electrode 220.

The first substrate 110 may include a cover substrate. In addition, the first and second substrates 110 and 120 may be bonded to each other through an optical clear adhesive (OCA).

Further, at least one of the first and second sensing electrodes 210 and 220 may have a mesh shape, and may include the dummy electrode and/or the reinforcement electrodes described above.

Since the dummy electrode and the reinforcement electrodes are the same as those described according to previous embodiments, the details thereof will be omitted below.

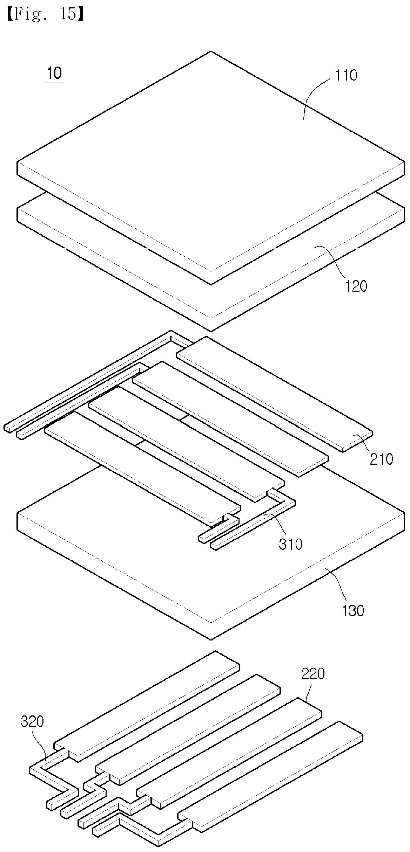

Referring to FIG. 15, the touch window 10 according to the embodiment may include the first to third substrates 110 to 130, and may include the first sensing electrode on the second substrate 120 and the second sensing electrode on the third substrate 130.

In detail, the second substrate 120 is provided on one surface thereof with the first sensing electrode 210 extending in one direction and the first wire electrode 310 connected with the first sensing electrode 210. The third substrate 130 is provided on one surface thereof with the second sensing electrode 220 extending in a direction different from the one direction and the second wire electrode 320 connected with the second sensing electrode 220.

The first substrate 110 may include a cover substrate. In addition, the first to third substrates 110 to 130 may be bonded to each other through an optical clear adhesive (OCA).

Further, at least one of the first and second sensing electrodes 210 and 220 may have a mesh shape, and may include the dummy electrode and/or the reinforcement electrodes described above.

Since the dummy electrode and the reinforcement electrodes are the same as those described according to previous embodiments, the details thereof will be omitted below.

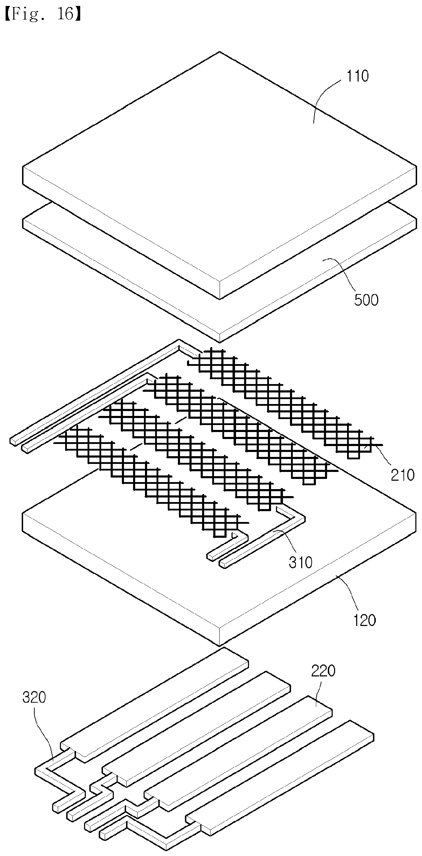

Referring to FIG. 16, the touch window 10 according to the embodiment may include the first substrate 110, the second substrate 120, and the dielectric layer 500, and may include the first sensing electrode 210 on the second substrate 120 and the second sensing electrode 220 on the dielectric layer 500.

In detail, the second substrate 120 is provided on one surface thereof with the first sensing electrode 210 extending in one direction and the first wire electrode 310 connected with the first sensing electrode 210. The dielectric layer 500 is provided on one surface thereof with the second sensing electrode 220 extending in a direction different from the one direction and the second wire electrode 320 connected with the second sensing electrode 220.

For example, the dielectric layer 500 may include an insulating group including halogen compound of alkali metal or alkali earth metal, such as LiF, KCl, CaF₂, or MgF₂, or fused silica, such as SiO₂, SiNX, etc.; a semiconductor group including InP or InSb; transparent oxide used for semiconductor or dielectric substance including In compound, such as ITO or IZO, mainly used for a transparent electrode, or transparent oxide used for semiconductor or dielectric substance, such as ZnOx, ZnS, ZnSe, TiOx, WOx, MoOx, or ReOx; an organic semiconductor group including Alq3, NPB, TAPC, 2TNATA, CBP or Bphen; and a low-K material such as silsesquioxane or a derivative ((H-SiO3/2)n) thereof, methylsilsesquioxane (CH3-SiO3/2)n), porous silica or porous silica doped with fluorine or carbon atoms, porous zinc oxide (ZnOx), cyclized-perfluoropolymer (CYTOP) or a mixture thereof.

The dielectric layer 500 may have visible ray transmittance of 79% to 99%.

A thickness of the dielectric layer 500 may be less than a thickness of the first substrate 110 and/or the second substrate 120. In detail, the thickness of the dielectric layer 500 may be 0.01 to 0.1 times thicker than the thicknesses of the first substrate 110 and/or the second substrate 120. For example, the thicknesses of the first substrate 110 and/or the second substrate 120 may be about 0.1 mm, and the thickness of the dielectric layer 500 may be about 0.001 mm.

Thus, the touch window shown in FIG. 16 may have the thickness less than that of a structure of employing two substrates according to the related art. Specifically, since the dielectric layer 500 may be substituted for one electrode substrate, a touch window having a thin thickness may be ensured.

In addition, according to the related art, an optical clear adhesive (OCA) is additionally required in a structure in which two substrates are stacked. However, according to the touch window, one electrode substrate is used and the sensing electrode is directly formed on the dielectric layer, so that the optical clear adhesive may be omitted. Therefore, the cost may be reduced.

That is, the touch window having a thin thickness can be ensured due to the dielectric layer 500, so that the transmittance may be improved

The first substrate 110 may include a cover substrate. In addition, at least one of the first and second sensing electrodes 210 and 220 may have a mesh shape, and may include the dummy electrode and/or the reinforcement electrodes described above.

Since the dummy electrode and the reinforcement electrodes are the same as those described according to previous embodiments, the details thereof will be omitted below.

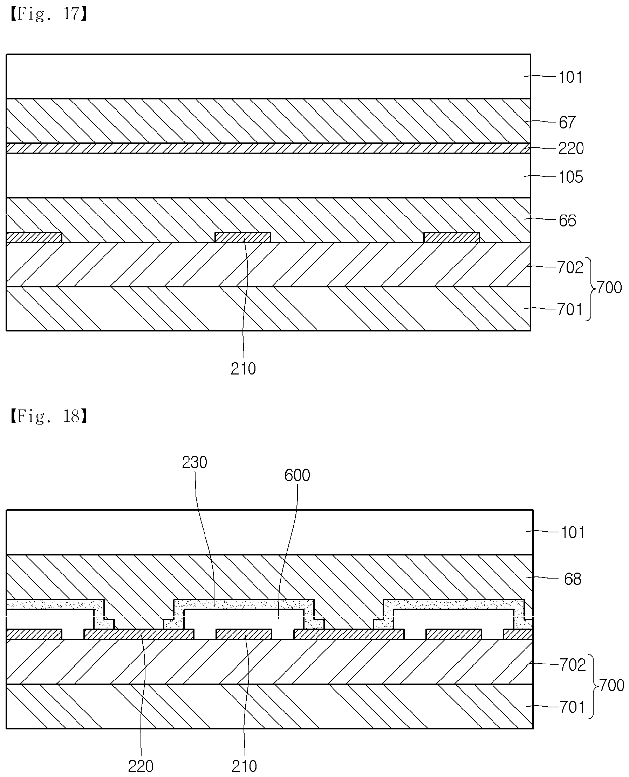

Hereinafter, a touch device in which the touch window including the dummy part is assembled with the display panel will be described with reference to FIGS. 17 to 22.

Referring to FIGS. 17 and 18, the touch device according to the embodiment may include a touch window integrally formed with a display panel 700. In other words, a substrate to support at least one sensing electrode may be omitted.

In detail, at least one sensing electrode may be formed on at least one surface of the display panel 700. The display panel 700 includes first and second substrates 701 and 702. In other words, at least one sensing electrode may be formed on at least one surface of the first substrate 701 or the second substrate 702.

When the display panel 700 is a liquid crystal display panel, the display panel 700 may have a structure in which a first substrate 701 including a thin film transistor (TFT) and a pixel electrode is combined with a second substrate 702 including color filter layers while a liquid crystal layer is interposed between the first and second substrates 701 and 702.

Further, the display panel 700 may be a liquid crystal display panel having a color filter on transistor (COT) structure formed by combining the first substrate 701 formed thereon with a tin film transistor (TFT), a color filter, and a black matrix with the second substrate 702 while the liquid crystal layer is interposed between the first and second substrates 701 and 702. In other words, the TFT may be formed on the first substrate 701, a protective layer may be formed on the TFT, and the color filter layer may be formed on the protective layer. In addition, the pixel electrode, which makes contact with the TFT, is formed on the first substrate 701. In this case, to improve an aperture ratio and simplify a mask process, the black matrix may be omitted, and a common electrode may perform a function of the black matrix together with the inherent function thereof.

In addition, when the display panel 700 is a liquid crystal panel, the display device may further include a backlight unit for supplying light onto a rear surface of the display panel 700.

When the display panel 700 is an organic light emitting device, the display panel 700 includes a self light-emitting device which does not require any additional light source. In the display panel 700, the thin film transistor is formed on the first substrate 701, and an organic light-emitting device (OLED) making contact with the thin film transistor is formed. The OLED may include an anode, a cathode and an organic light-emitting layer formed between the anode and the cathode. In addition, the display panel 700 may further include the second substrate 702, which performs the function of an encapsulation substrate for encapsulation, on the OLED.

In this case, at least one sensing electrode may be formed on the top surface of an upper substrate. Although drawings show that the sensing electrode is formed on the top surface of the second substrate 702, at least one sensing electrode may be formed on the top surface of the first substrate 701 if the first substrate 701 is the upper substrate.

Referring to FIG. 17, the first sensing electrode 210 may be formed on the top surface of the display panel 700. In addition, the first wire connected with the first sensing electrode 210 may be formed. A touch substrate 105 having the second sensing electrode 220 and the second wire may be formed on the display panel 700 having the first sensing electrode 210. A first adhesive layer 66 may be interposed between the touch substrate 105 and the display panel 700.

Although drawings show that the second sensing electrode 220 is formed on the top surface of the touch substrate 105, a cover substrate 101 is provided on the touch substrate 105 while interposing a second adhesive layer 67 between the cover substrate 101 and the touch substrate 105. The second sensing electrode 220 may be formed on the rear surface of the touch substrate 105. In this case, the touch substrate 105 may serve as a cover substrate.

In other words, the embodiment is not limited thereto, but various structures, in which the first sensing electrode 210 is formed on the top surface of the display panel 700, the touch substrate 105 to support the second sensing electrode 220 is provided on the display panel 700, and the touch substrate 105 is combined with the display panel 700, may be employed.

In addition, the touch substrate 105 may include a polarizing plate. In other words, the second sensing electrode 220 may be formed on the top surface or the rear surface of the polarizing late. Accordingly, the second sensing electrode may be formed integrally with the polarizing plate.

Independently from the touch substrate 105, the polarizing plate may be additionally provided. In this case, the polarizing plate may be provided under the touch substrate 105. For example, the polarizing plate may be interposed between the touch substrate 105 and the display panel 700. Further, the polarizing plate may be provided above the touch substrate 105.

The polarizing plate may be a linear polarizing plate or an anti-reflection polarizing plate. For example, when the display panel 700 is a liquid crystal display panel, the polarizing plate may be a linear polarizing plate. In addition, when the display panel 700 is an organic electroluminescent display panel, the polarizing plate may be an anti-reflection polarizing plate.

Referring to FIG. 18, the first and second sensing electrodes 210 and 220 may be formed on the top surface of the display panel 700. In addition, the first wire connected with the first sensing electrode 210 and the second wire connected with the second sensing electrode 220 may be formed on the top surface of the display panel 700.

In addition, an insulating layer 600 may be formed on the first sensing electrode 210 to expose the second sensing electrode 220. A bridge electrode 230 may be further formed on the insulating layer 600 for connection with the second sensing electrode 220.

However, the embodiment is not limited to the structure shown in drawings. In other words, the first sensing electrode 210, and the first and second wires may be formed on the top surface of the display panel 700, and the insulating layer may be formed on the first sensing electrode 210 and the first wire. The second sensing electrode 220 is formed on the insulating layer, and a connection part to connect the second sensing electrode 220 with the second wire may be additionally provided.

Further, the first sensing electrode 210, the second sensing electrode 220, the first wire, and the second wire may be formed in active region on the top surface of the display panel 700. The first sensing electrode 210 and the second sensing electrode may be spaced apart from each other while being adjacent to each other. In other words, an insulating layer and a bridge electrode may be omitted.

That is to say, the embodiment is not limited to drawings, but various structures may be employed if the first and second sensing electrodes 210 and 220 are formed on the display panel 700 without an additional substrate to support the sensing electrode.

The cover substrate 101 may be provided on the display panel 700 while interposing an adhesive layer 68 between the display panel 700 and the cover substrate 101. In this case, a polarizing plate may be interposed between the display panel 700 and the cover substrate 101.

According to the touch device of the embodiment, at least one substrate to support the sensing electrode may be omitted. Accordingly, a thin and light touch device can be manufactured.

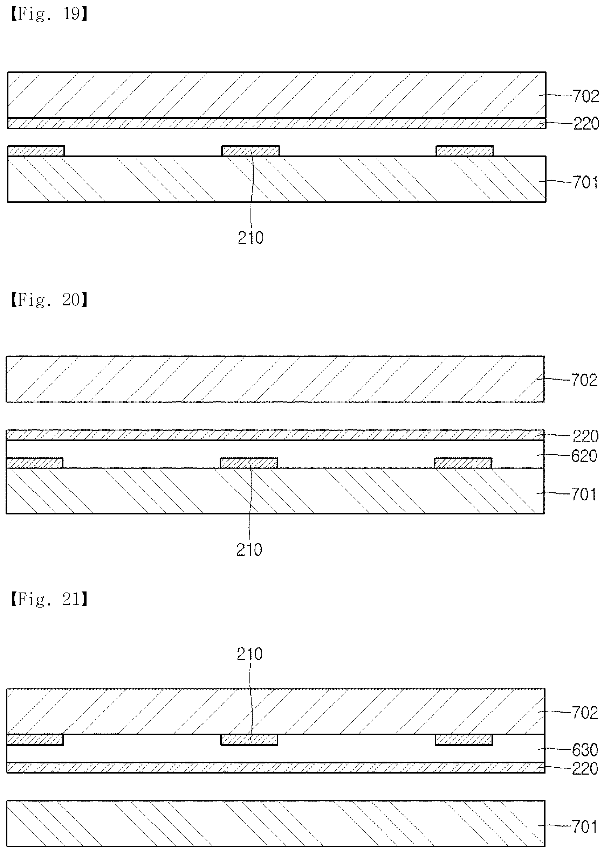

Hereinafter, a touch device according to another embodiment will be described with reference to FIGS. 19 to 22. In the following description, the repetition of the description of the previous embodiments will be omitted, and the same reference numerals will be assigned to the same elements.

Referring to FIGS. 19 to 22, the touch device according to the present embodiment may include a touch window formed integrally with the display panel. In other words, at least a substrate to support a sensing electrode may be omitted, or both substrates to support the sensing electrode may be omitted.

A sensing electrode provided in an active region and serving as a sensor to detect a touch, and a wire to apply an electrical signal to the sensing electrode may be formed inside the display panel. In detail, at least one sensing electrode or at least one wire may be formed inside the display panel.

The display panel includes the first and second substrates 701 and 702. At least one of the first and second sensing electrodes 210 and 220 is interposed between the first and second substrates 701 and 702. In other words, at least one sensing electrode may be formed on at least one surface of the first substrate 701 or the second substrate 702.

Referring to FIGS. 19 to 21, the first sensing electrode 210, the second sensing electrode 220, the first wire, and the second wire may be interposed between the first and second substrates 701 and 702. In other words, the first sensing electrode 210, the second sensing electrode 220, the first wire, and the second wire may be provided inside the display panel.

Referring to FIG. 19, the first sensing electrode 210 and the first wire may be formed on the top surface of the first substrate 701 of the display panel, and the second sensing electrode 220 and the second wire may be formed on the rear surface of the second substrate 702. Referring to FIG. 20, the first sensing electrode 210, the second sensing electrode 220, the first wire, and the second wire may be formed on the top surface of the first substrate 701. An insulating layer 620 may be formed between the first and second sensing electrodes 210 and 220. In addition, referring to FIG. 21, the first and second sensing electrodes 210 and 220 may be formed on the rear surface of the second substrate 702. The insulating layer 630 may be interposed between the first and second sensing electrodes 210 and 220.

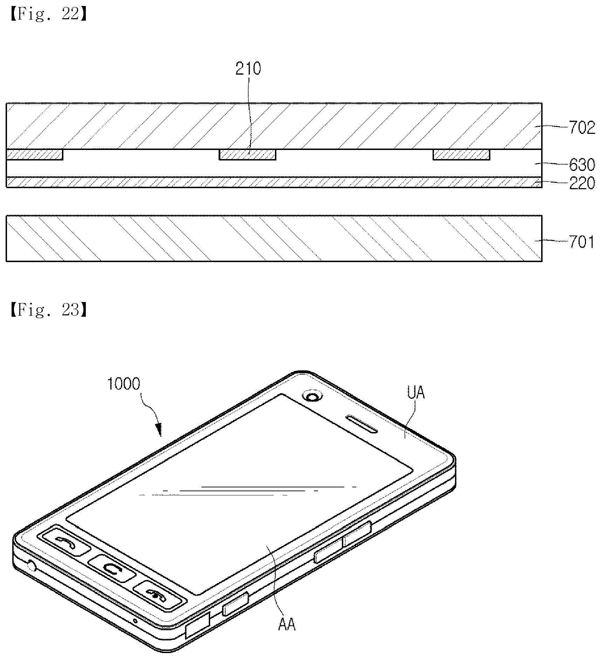

Referring to FIG. 22, the first sensing electrode 210 and the first wire may be formed between the first and second substrates 701 and 702. In addition, the second sensing electrode 220 and the second wire may be formed on the touch substrate. The touch substrate may be provided on the display panel including the first and second substrates 701 and 702. In other words, the first sensing electrode 210 and the first wire may be provided inside the display panel, and the second sensing electrode 220 and the second wire may be provided outside the display panel.

The first sensing electrode 210 and the first wire may be formed on the top surface of the first substrate 701 or the rear surface of the second substrate 702. In addition, an adhesive layer may be interposed between the touch substrate and the display panel. In this case, the touch substrate may serve as a cover substrate.

Although drawings show that the second sensing electrode 220 is formed on the rear surface of the touch substrate, the embodiment is not limited thereto. The second sensing electrode 220 may be formed on the top surface of the touch substrate, and a cover substrate may be additionally provided while the adhesive layer is interposed between the touch substrate and the cover substrate.

In other words, although not shown in drawings, and various structures may be employed if the first sensing electrode 210 and the first wire are provided inside the display panel, and the second sensing electrode 220 and the second wire are provided outside the display panel.

In addition, the touch substrate may include a polarizing plate. In other words, the second sensing electrode 220 may be formed on the top surface or the rear surface of the polarizing late. Accordingly, the second sensing electrode may be formed integrally with the polarizing plate.

Independently from the touch substrate, the polarizing plate may be additionally provided. In this case, the polarizing plate may be provided under the touch substrate. For example, the polarizing plate may be interposed between the touch substrate and the display panel. Further, the polarizing plate may be provided above the touch substrate.

When the display panel is a liquid crystal display panel, and the sensing electrode is formed on the top surface of the first substrate 701, the sensing electrode may be formed together with a thin film transistor (TFT) or a pixel electrode. In addition, when the sensing electrode is formed on the rear surface of the second substrate 702, a color filter layer may be formed on the sensing electrode, or the sensing electrode may be formed on the color filter layer. When the display panel is an organic electroluminescent display panel, and when the sensing electrode is formed on the top surface of the first substrate 701, the sensing electrode may be formed together with the TFT or an organic light emitting device.

Further, according to the touch device of the embodiment, an additional substrate to support the sensing electrode may be omitted. Therefore, a thin and light touch device may be manufactured. In addition, the sensing electrode and the wire are formed together with the device formed in the display panel, so that the processes can be simplified, and the cost can be reduced.

Hereinafter, a touch device employing touch windows according to the embodiment will be described with reference to FIGS. 23 to 26.

Referring to FIG. 23, a mobile end is shown as an example of a touch device. A mobile terminal 1000 may include an active region AA and an unactive region UA. The active region AA may be provided to sense a touch signal through the touch by a finger, and an instruction icon pattern part and a logo may be formed in the unactive area UA.

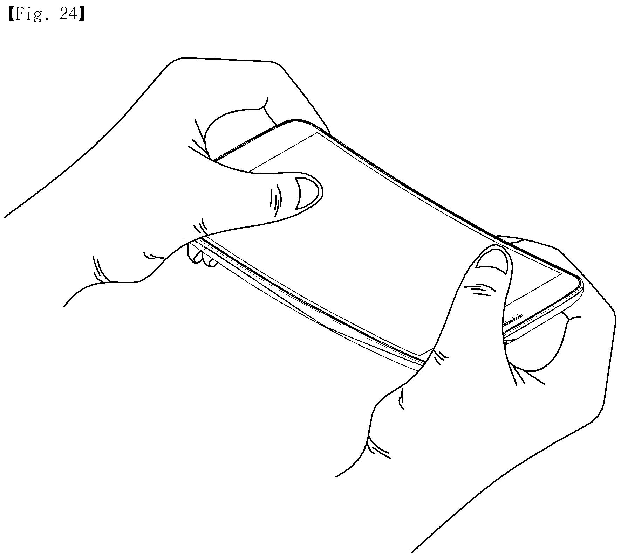

Referring to FIG. 24, a touch window may be a flexible touch window. Accordingly, the touch device including the flexible touch window may be a flexible touch device. Therefore, the touch device may be curved or bent by a hand of a user.

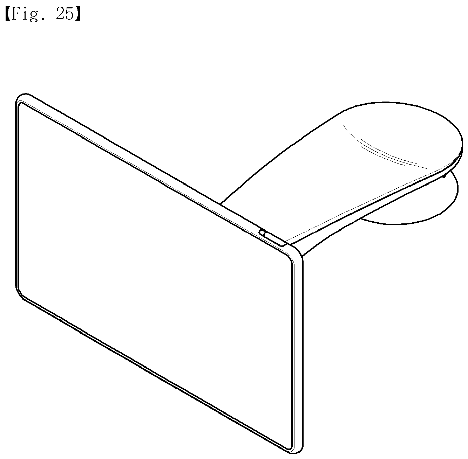

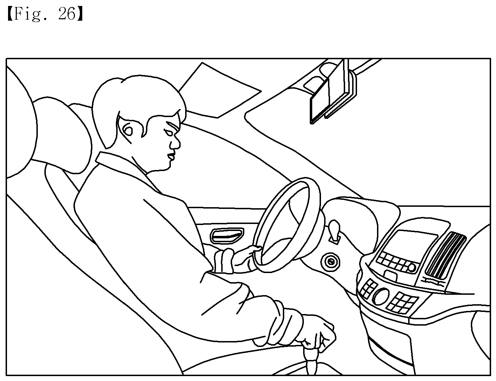

Further, referring to FIG. 25, the touch window may be applied to a vehicle navigation system as well as a touch device such as a mobile terminal. In addition, referring to FIG. 26, the touch panel may be applied to the internal parts of the vehicle. In other words, the touch panel may be applied to various parts inside the vehicle, which allow the application of the touch panel. Accordingly, the touch panel is applied to a dashboard as well as a personal navigation display (PND), so that a center information display (CID) may be implemented. However, the embodiment is not limited to the above. In other words, the touch device may be used for various electronic appliances.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the appended claims. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

## Claims

1. A touch window (10 ; 20) comprising:
a substrate (100) comprising an active region (AA) and an unactive region (UA);
a sensing electrode (200) on the active region (AA);
a wire electrode (300) connected with one end of the sensing electrode (200);
a test connector (400) connected with an opposite end of the sensing electrode (200); and
wherein the test connector is used for measuring electrical characteristics of the sensing electrode, and
wherein the touch window (10; 20) further comprises a first reinforcement electrode (510) connected between the sensing electrode (200) and the test connector (400),
wherein the sensing electrode (200) and the first reinforcement electrode (510) are formed in a mesh shape, and the touch window being further **characterised by**:
wherein the sensing electrode (200) has a first mesh line (LA), the first reinforcement electrode (510) has a second mesh line (LA), and the thickness of the second mesh line (LA) is thicker than a thickness of the first mesh line (LA).

2. The touch window (10 ; 20) of claim 1, wherein the test connector (400) is provided in at least one of the active region (AA) and the unactive region (UA).

3. The touch window (10 ; 20) of claim 1 or 2, wherein the test connector (400) comprises:
a resin layer (105) on the substrate (100);
an intaglio pattern on the resin layer (105); and
a conductive material (430) filled in the intaglio pattern (P).

4. The touch window (10 ; 20) of claim 3, wherein the intaglio pattern (P) is formed therein with a protrusion (420).

5. The touch window (10 ; 20) at least one of claim 1 to 4, further comprising a second reinforcement electrode (520) between the sensing electrode (200) and the wire electrode (300).

6. The touch window (10 ; 20) of claim 5, wherein the second reinforcement electrode (520) is formed in a mesh shape.

7. The touch window (10 ; 20) of claim 5 or 6, wherein the second reinforcement electrode (520) has a third mesh line (LA), and the first mesh line (LA) has a thickness different from a thickness of the third mesh line (LA).

8. The touch window (10 ; 20) of claim 7, wherein the first mesh line (LA) has a thickness less than a thickness of the third mesh line (LA).

## Patentansprüche

1. Touch-Fenster (10; 20), umfassend:
ein Substrat (100), umfassend eine aktive Region (AA) und eine inaktive Region (UA),
eine Messelektrode (200) auf der aktiven Region (AA) ;
eine Drahtelektrode (300), die mit einem Ende der Messelektrode (200) verbunden ist;
einen Testverbinder (400), der mit einem entgegen gesetzten Ende der Messelektrode (200) verbunden ist; und wobei der Testverbinder verwendet wird, um elektrische Eigenschaften der Messelektrode zu messen, und wobei das Touch-Fenster (10; 20) weiter eine erste Verstärkungselektrode (510) umfasst, die zwischen der Messelektrode (200) und dem Testverbinder (400) verbunden ist, wobei die Messelektrode (200) und die erste Verstärkungselektrode (510) in einer Maschenform gebildet sind, und das Touch-Fenster weiter wie folgt **dadurch gekennzeichnet ist**:
**dass** die Messelektrode (200) eine erste Maschenlinie (LA) aufweist, die erste Verstärkungselektrode (510) eine zweite Maschenlinie (LA) aufweist und die Dicke der zweiten Maschenlinie (LA) größer als eine Dicke der ersten Maschenlinie (LA) ist.

2. Touch-Fenster (10; 20) nach Anspruch 1, wobei der Testverbinder (400) mit mindestens einer der aktiven Region (AA) und der inaktiven Region (UA) ausgestattet ist.

3. Touch-Fenster (10; 20) nach Anspruch 1 oder 2, wobei der Testverbinder (400) Folgendes umfasst:
eine Harzschicht (105) auf dem Substrat (100);
ein Tiefdruckmuster auf der Harzschicht (105); und
ein leitendes Material (430), gefüllt im Tiefdruckmuster (P).

4. Touch-Fenster (10; 20) nach Anspruch 3, wobei das Tiefdruckmuster (P) darin mit einem Vorsprung (420) gebildet ist.

5. Touch-Fenster (10; 20) nach mindestens einem der Ansprüche 1 bis 4, weiter umfassend eine zweite Verstärkungselektrode (520) zwischen der Messelektrode (200) und der Drahtelektrode (300).

6. Touch-Fenster (10; 20) nach Anspruch 5, wobei die zweite Verstärkungselektrode (520) in einer Maschenform gebildet ist.

7. Touch-Fenster (10; 20) nach Anspruch 5 oder 6, wobei die zweite Verstärkungselektrode (520) eine dritte Maschenlinie (LA) aufweist und die erste Maschenlinie (LA) eine Dicke aufweist, die verschieden von einer Dicke der dritten Maschenlinie (LA) ist.

8. Touch-Fenster (10; 20) nach Anspruch 7, wobei die erste Maschenlinie (LA) eine Dicke aufweist, die geringer als eine Dicke der dritten Maschenlinie (LA) ist.

## Revendications

1. Fenêtre tactile (10 ; 20) comprenant :
un substrat (100) comprenant une région active (AA) et une région inactive (UA) ;
une électrode de détection (200) sur la région active (AA) ;
une électrode filaire (300) connectée à une extrémité de l'électrode de détection (200) ;
un connecteur de test (400) connecté à une extrémité opposée de l'électrode de détection (200) ; et
dans laquelle le connecteur de test est utilisé pour mesurer des caractéristiques électriques de l'électrode de détection, et
dans laquelle la fenêtre tactile (10 ; 20) comprend en outre une première électrode de renforcement (510) connectée entre l'électrode de détection (200) et le connecteur de test (400),
dans laquelle l'électrode de détection (200) et la première électrode de renforcement (510) sont formées selon une forme maillée et la fenêtre tactile étant en outre **caractérisée** en ce qui :
dans laquelle l'électrode de détection (200) a une première ligne maillée (LA), la première électrode de renforcement (510) a une deuxième ligne maillée (LA), et l'épaisseur de la deuxième ligne maillée (LA) est plus épaisse qu'une épaisseur de la première ligne maillée (LA).

2. Fenêtre tactile (10 ; 20) selon la revendication 1, dans laquelle le connecteur de test (400) est fourni dans au moins une de la région active (AA) et de la région inactive (UA).

3. Fenêtre tactile (10 ; 20) selon la revendication 1 ou 2, dans laquelle le connecteur de test (400) comprend :
une couche de résine (105) sur le substrat (100) ;
un motif en creux sur la couche de résine (105) ; et
un matériau conducteur (430) remplissant le motif en creux (P).

4. Fenêtre tactile (10 ; 20) selon la revendication 3, dans laquelle le motif en creux (P) est formé avec une protubérance (420) à l'intérieur de ce dernier.

5. Fenêtre tactile (10 ; 20) selon au moins une des revendications 1 à 4, comprenant en outre une seconde électrode de renforcement (520) entre l'électrode de détection (200) et l'électrode filaire (300).

6. Fenêtre tactile (10 ; 20) selon la revendication 5, dans laquelle la seconde électrode de renforcement (520) est formée selon une forme maillée.

7. Fenêtre tactile (10 ; 20) selon la revendication 5 ou 6, dans laquelle la seconde électrode de renforcement (520) a une troisième ligne maillée (LA) et la première ligne de maille (LA) a une épaisseur différente d'une épaisseur de la troisième ligne maillée (LA).

8. Fenêtre tactile (10 ; 20) selon la revendication 7, dans laquelle la première ligne maillée (LA) a une épaisseur inférieure à une épaisseur de la troisième ligne maillée (LA).
